# EUROPÄISCHE PATENTANMELDUNG

(11) **EP 2 055 664 A1**
(43) Veröffentlichungstag der Anmeldung: **06.05.2009**
(21) Anmeldenummer: 07021278.2
(22) Anmeldetag: 31.10.2007
(51) Int. Cl.: B66C 23/80, B60S 9/12

(54) **Translatorisches Stützbein**

(71) Anmelder: Epsilon Kran GmbH, 5061 Elsbethen-Glasenbach (AT)
(72) Erfinder: Steindl, Georg, 5061 Elsbethen-Glasenbach (AT)
(74) Vertreter: Gangl, Markus

(57) **Zusammenfassung**

Stützbein (1) für eine Abstützvorrichtung (2) mit einer in einem Zylinder (3) ausfahrbar gelagerten Kolbenstange (4), mit deren freiem Ende das Stützbein (1) gegen den Untergrund abstützbar ist, wobei eine Lagervorrichtung (5) vorgesehen ist, welche den Zylinder (3) vertikal verschiebbar lagert.

## Beschreibung

Die Erfindung betrifft ein Stützbein für eine Abstützvorrichtung mit einer in einem Zylinder ausfahrbar gelagerten Kolbenstange, mit deren freiem Ende das Stützbein gegen den Untergrund abstützbar ist.

Im Bereich von Arbeitsmaschinen, beispielsweise Fahrzeugkranen, finden zylindrische Stützbeine Verwendung. Besonders bei hohen Stützbeinen (über 2m Gesamtausfahrlänge des Stützbeines) ist deren Lagerung mit Problemen verbunden, wobei die Stützbeine häufig an einem Querträger bzw. Ausleger eines Fahrzeugkranes schwenkbar gelagert sind. Das heißt, die Stützbeine werden bei Nichtgebrauch von der vertikalen, gegen den Boden abstützenden, Lage in eine andere, vorzugsweise horizontale, Lage am Fahrzeugkran verschwenkt.

Aufgabe der Erfindung ist es nun, die Lagerung des Stützbeins am Ausleger bzw. am Querträger derart auszugestalten, dass die aufwändige und viel Platz einnehmende Verschwenkung der einzelnen Stützbeine am Fahrzeugkran nicht nötig ist.

Dies wird beim erfindungsgemäßen Stützbein dadurch erreicht, dass eine Lagervorrichtung vorgesehen ist, welche den Zylinder vertikal verschiebbar lagert. Dies führt dazu, dass kein Verschwenken des gesamten Stützbeins mehr nötig ist, sondern der Zylinder, der die Kolbenstange aufnimmt, über die Lagervorrichtung hinaus translatorisch verschiebbar ist. Somit wird - anders ausgedrückt - das gesamte Stützbein bei Nichtbenützung zumindest teilweise ineinander geschoben und zumindest teilweise über die Lagervorrichtung überstehend vertikal gelagert bzw. positioniert.

Vorteilhaft ist dabei vorgesehen, dass die Kolbenstange im Zylinder hydraulisch ein-und ausfahrbar ist.

Des Weiteren kann vorgesehen sein, dass die Lagervorrichtung als zylinderförmige Hülse ausgeführt ist. Durch diese Ausführungsform kann der Zylinder samt Kolbenstange passgenau in der Lagervorrichtung bewegt werden.

Des Weiteren kann vorteilhaft vorgesehen sein, dass eine Antriebsvorrichtung zum vertikalen Verschieben des Zylinders in der Lagervorrichtung angeordnet ist. Die Verschiebung des Zylinders in der Lagervorrichtung kann aber auch auf andere Art, z. B. über ein mechanisches Getriebe, erfolgen. Die Antriebskraft könnte dabei durch einen Elektromotor erzeugt werden.

Darüber hinaus kann vorteilhaft vorgesehen sein, dass die Antriebsvorrichtung ein hydraulisches Pumpsystem aufweist. Dieses hydraulische Pumpsystem kann zentral in der Abstützvorrichtung angeordnet sein und über Ventile die einzelnen Stützbeine steuern.

Gemäß einem weiteren Ausführungsbeispiel der Erfindung kann vorgesehen sein, dass durch die Antriebsvorrichtung der Zylinder über einen am Zylinder befestigten Mitnehmer in der Lagervorrichtung zwischen zwei Begrenzern der Lagervorrichtung verschiebbar gelagert ist.

Ein weiteres bevorzugtes Ausführungsbeispiel sieht vor, dass am freien Ende der Kolbenstange ein Abstützteller angeordnet ist. Dieser Abstützteller bietet eine größere Auflagefläche für die einzelnen Stützbeine und kann somit auch bei Einsatz des Fahrzeugkranes auf weicherem Untergrund eingesetzt werden.

Besonders vorteilhaft ist vorgesehen, dass die Kolbenstange im Zylinder und der Zylinder in der Lagervorrichtung, vorzugsweise über eine gemeinsame Antriebsvorrichtung, synchron vertikal verschiebbar sind. Dies führt zu einer gemeinsamen Verschiebung des Zylinders in der Lagervorrichtung und der Kolbenstange im Zylinder, wodurch die größer werdenden seitlichen Kräfte beim Ausfahren nicht zu ungleichmäßiger Belastung führen. Der mit Hydraulikflüssigkeit gefüllte Bereich in Zylinder, Kolbenstange und Lagervorrichtung wird dabei über eine hydraulischen Pumpleitung vom hydraulischen Pumpsystem versorgt.

Schutz wird auch begehrt für eine Abstützvorrichtung mit einem Stützbein nach einem der vorhergehenden Ausführungsbeispiele, wobei die Lagervorrichtung an einem Querträger der Abstützvorrichtung oder an einem im Querträger verschiebbar angeordneten Ausleger angeordnet ist. Durch einen Ausleger kann der Bereich mit dem Stützbein vom Querträger rückgeschoben werden, wodurch die einzelnen Stützbeine weiter auseinander liegen.

Gemäß einem weiteren Ausführungsbeispiel kann vorgesehen sein, dass die Abstützvorrichtung Teil einer Arbeitsmaschine, vorzugsweise eines Fahrzeugkranes, ist. Der Einsatz der erfindungsgemäßen Stützbeine für andere Arbeitsmaschinen außer Fahrzeugkrane soll nicht ausgeschlossen werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen
- Fig. 1: einen Querschnitt eines eingefahrenen Stützbeins,
- Fig. 2: einen Querschnitt eines ausgefahrenen Stützbeins und
- Fig. 3: einen Teil einer Arbeitsmaschine samt Abstützvorrichtung.

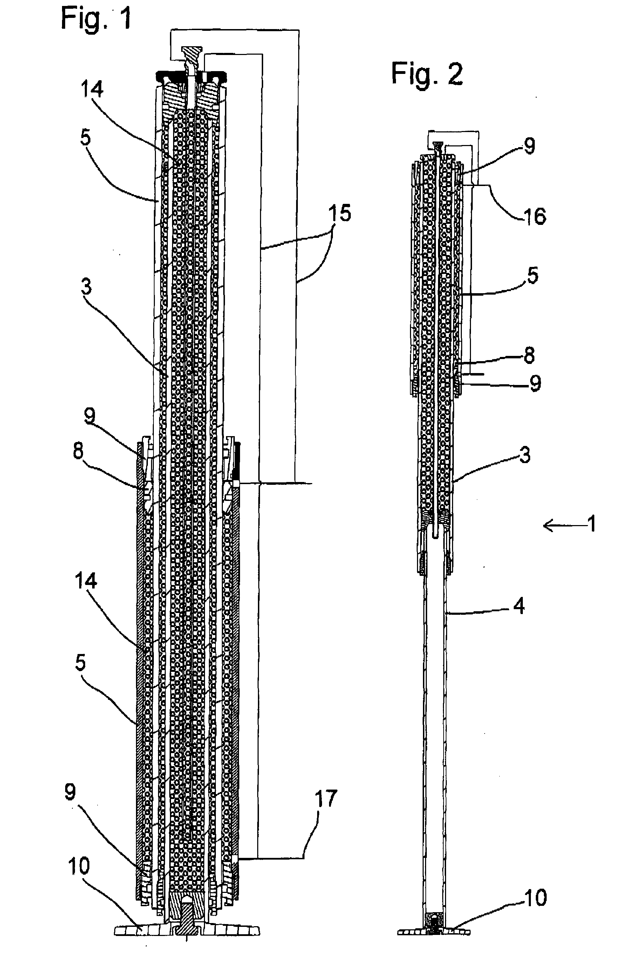

In Fig. 1 ist - von innen nach außen gesehen - die Hydraulikflüssigkeit 14 in der Kolbenstange 4 dargestellt. Diese ist über einen oberen und unteren Begrenzer im Zylinder 3 verschiebbar angeordnet. Der Zylinder 3 wiederum ist in der Lagervorrichtung 5 vertikal verschiebbar gelagert, wobei die Lagervorrichtung 5 im Lagerbereich ebenfalls Hydraulikflüssigkeit 14 beinhaltet. Am Zylinder 3 ist ein Mitnehmer 8 befestigt, welcher sich in diesem Lagerbereich durch über die Hydraulikleitungen 15 zugeführten Druck vom hydraulischen Pumpsystem 7 (nicht dargestellt) zwischen den Begrenzern 9 der Lagervorrichtung 5 bewegt. Im unteren Bereich der Kolbenstange ist der Abstützteller 10 angeordnet.

Fig. 2 zeigt ein ausgefahrenes Stützbein 1, wobei in diesem Fall der am Zylinder 3 fixierte Mitnehmer 8 im unteren Lagerbereich der Lagervorrichtung 5 am Begrenzer 9 anschlägt. In dieser Darstellung wird über das Ventil 16 des hydraulischen Pumpsystems 7 (nicht dargestellt) der Druck zum Ausfahren des Stützbeins 1 aufgebaut. In Fig. 1 erfolgt der Druck des hydraulischen Pumpsystems 7 durch das Ventil 17 zum Einfahren des Stützbeines 1.

Im Allgemeinen ist zu Fig. 1 und 2 zu bemerken, dass nur unter Druck stehende Hydraulikflüssigkeit 14 dargestellt ist. Es sind somit auch Bereiche, in denen keine unter Druck stehende Hydraulikflüssigkeit 14 eingezeichnet sind, mit Hydraulikflüssigkeit 14 gefüllt. Im Speziellen gilt dies für den Bereich in der Kolbenstange 4 in Fig. 2.

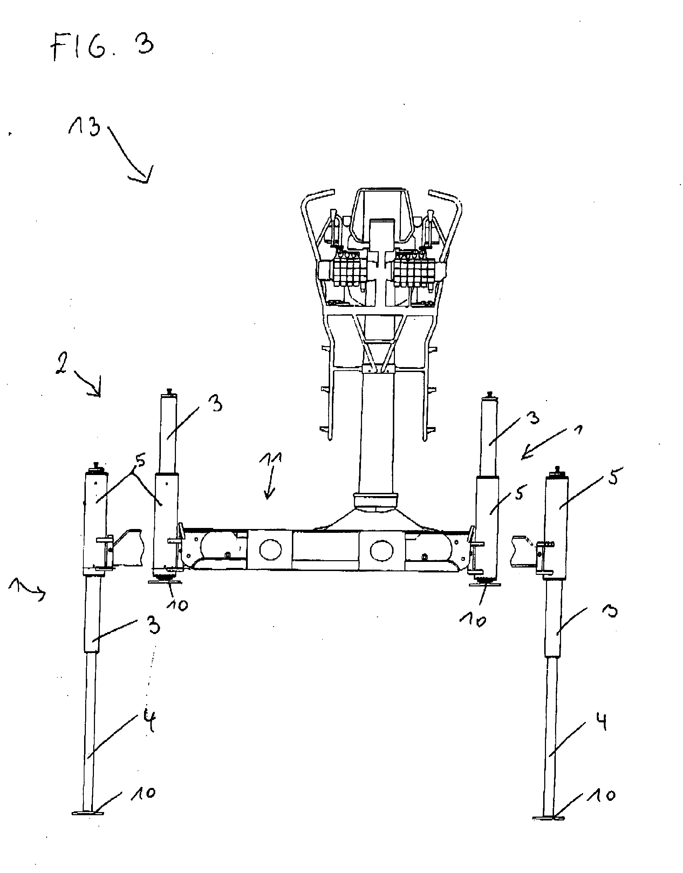

Fig. 3 zeigt zumindest einen Teil einer Arbeitsmaschine 13 mit der im unteren Bereich angeordneten Abstützvorrichtung 2. Diese weist einen Querträger 11 auf, an welchem die Stützbeine 1 - vorzugsweise auch über einen Ausleger 12 (nicht dargestellt) - mittels der Lagervorrichtung 5 beweglich befestigt sind. In diesem Fall sind zwei Stützbeine 1 im ausgefahrenen Zustand und zwei Stützbeine 1 im eingefahrenen Zustand dargestellt. Die Gesamthöhe eines ausgefahrenen Stützbeins 1 beträgt im erfindungsgemäßen Ausführungsbeispiel ca. 2,40 m.

## Patentansprüche

1. Stützbein (1) für eine Abstützvorrichtung mit einer in einem Zylinder (3) ausfahrbar gelagerten Kolbenstange (4), mit deren freiem Ende das Stützbein
(1) gegen den Untergrund abstützbar ist, **dadurch gekennzeichnet, dass** eine Lagervorrichtung (5) vorgesehen ist, welche den Zylinder (3) vertikal verschiebbar lagert.

2. Stützbein (1) nach Anspruch 1, **dadurch gekennzeichnet, dass** die Kolbenstange (4) im Zylinder (3) hydraulisch ein- und ausfahrbar ist.

3. Stützbein (1) nach Anspruch 1 oder 2, **dadurch gekennzeichnet, dass** die Lagervorrichtung (5) als zylinderförmige Hülse ausgeführt ist.

4. Stützbein (1) nach einem der Ansprüche 1 bis 3, **dadurch gekennzeichnet, dass** eine Antriebsvorrichtung (6) zum vertikalen Verschieben des Zylinders (3) in der Lagervorrichtung (5) angeordnet ist.

5. Stützbein (1) nach einem der Ansprüche 1 bis 4, **dadurch gekennzeichnet, dass** die Antriebsvorrichtung (6) ein hydraulisches Pumpsystem (7) aufweist.

6. Stützbein (1) nach einem der Ansprüche 1 bis 5, **dadurch gekennzeichnet, dass** durch die Antriebsvorrichtung (6) der Zylinder (3) über einen am Zylinder (3) befestigten Mitnehmer (8) in der Lagervorrichtung (5) zwischen zwei Begrenzern (9) der Lagervorrichtung (5) verschiebbar gelagert ist.

7. Stützbein (1) nach einem der Ansprüche 1 bis 6, **dadurch gekennzeichnet, dass** am freien Ende der Kolbenstange (4) ein Abstützteller (10) angeordnet ist.

8. Stützbein (1) nach einem der Ansprüche 1 bis 7, **dadurch gekennzeichnet, dass** die Kolbenstange (4) im Zylinder (3) und der Zylinder (3) in der Lagervorrichtung (5), vorzugsweise über eine gemeinsame Antriebsvorrichtung (6), synchron vertikal verschiebbar sind.

9. Abstützvorrichtung mit einem Stützbein (1) nach einem der Ansprüche 1 bis 8, **dadurch gekennzeichnet, dass** die Lagervorrichtung (5) an einem Querträger (11) der Abstützvorrichtung (2) oder an einem im Querträger (11) verschiebbar angeordneten Ausleger (12) angeordnet ist.

10. Abstützvorrichtung nach Anspruch 9, **dadurch gekennzeichnet, dass** die Abstützvorrichtung (2) Teil einer Arbeitsmaschine (13), vorzugsweise eines Fahrzeugkranes, ist.
